# EUROPEAN PATENT SPECIFICATION

(11) **EP 0 676 632 B1**
(45) Date of publication and mention of the grant of the patent: **23.09.1998**
(21) Application number: 95104982.4
(22) Date of filing: 03.04.1995
(51) Int. Cl.: G01N 15/14, G01N 21/85, G01N 21/88, B29C 47/92

(54) **Device for detecting foreign objects in resin**
Vorrichtung zur Feststellung von Fremdstoffen in einem Kunststoffharz
dispositif pour détecter de matériaux étrangers dans une résine

(30) Priority: 04.04.1994 JP 90507/94; 27.01.1995 JP 31646/95
(43) Date of publication of application: 11.10.1995
(73) Proprietor: Sumitomo Electric Industries, Ltd., Osaka 541 (JP)
(72) Inventor: Kato, Shigeru, c/o Itami Works of Sumitomo Elec., Itami-shi, Hyogo (JP); Kometani, Toshio, c/o Itami Works of Sumitomo, Itami-shi, Hyogo (JP); Jinno, Atsuhide, c/o Osaka Works of Sumitomo, Konohana-ku, Osaka (JP); Miyake, Masataka, c/o Osaka Works of Sumitomo, Konohana-ku, Osaka (JP)
(74) Representative: Eder, Eugen, Dipl.-Ing.

(56) References cited:
- EP-A- 0 582 865
- DE-A- 3 403 956
- US-A- 4 814 130
- McGRAW-HILL ENCYCLOPEDIA OF SCIENCE & TECHNOLOGY, 1992, p.38ff, keyword "Plastics processing"

## Description

The present invention relates to a device for detecting foreign objects in a resin which is transparent in a molten state, such as a plastic material used as coverings of plastic power cables such as crosslinked polyethylene power cables while it is flowing through a passage in an extrusion head, according to claim 1.

Even the tiniest foreign objects having a diameter of several tens of microns may have a grave, harmful effect on the dielectric strength of an extra-high-voltage plastic insulated power cable such as a 500kV-class crosslinked polyethylene power cable if they are present in the insulating layer of the cable. Thus, it is necessary to completely eliminate such potentially harmful foreign objects.

For this purpose, it is necessary to check the existence of foreign objects in the material resin while it is still in the form of pellets. But it is more desirable to check the existence of foreign objects in the resin while it is flowing through an extrusion head in the final step. Prior art refers therefor to a method of detecting foreign matter in a fluid (EP-A-0 582 865).

The aim is to check the existence of foreign objects in the material resin while it is flowing through an extrusion head in manufacturing a 500kV-class extra-high-voltage crosslinked polyethylene power cable.

According to the claim 1, there is provided a device for detecting visually or by picture processing foreign objects in a passage through an extrusion head in the final step of extrusion. The invention is characterized in that a see-through glass window is provided in a throat portion of the extrusion head, the throat portion being provided between a breaker plate mounted on the leading end of a screw and the body of the extrusion head including a die and a nipple and having a passage for resin having a restricted section, a light source and a camera arranged outside the see-through glass window, and a slide member so that minute foreign objects in a molten resin flowing through said throat portion are detected visually or by picture processing.

Other features and objects of the present invention will become apparent from the following description made with reference to the accompanying drawings, in which:
Fig. 1 is a vertical sectional view of the throat portion of the extrusion head provided with the detecting means for detecting foreign objects in resin according to the present invention;
Fig. 2 is a sectional view taken along a plane including the see-through glass window provided in the throat portion of Fig. 1;
Fig. 3 is a sectional view of another embodiment similar to Fig. 2;
Fig. 4 is a sectional view of a still another embodiment;
Figs. 5A and 5B are views illustrating two illumination arrangements for picture processing;
Fig. 6 is a perspective view of the frame supporting the see-through glass window;
Fig. 7 is a perspective view of the see-through glass window;
Fig. 8 is a view explaining problems when sheet packings are mounted on both sides of the see-through glass window;
Fig. 9 is a view of the see-through glass window having a resin material fused to both sides thereof;
Fig. 10 is a sectional view of a throat portion corresponding to Fig. 2 which is used for picture processing in the transmitted illumination arrangement; and
Fig. 11 is a vertical sectional view of the head of an ordinary plastic extruder.

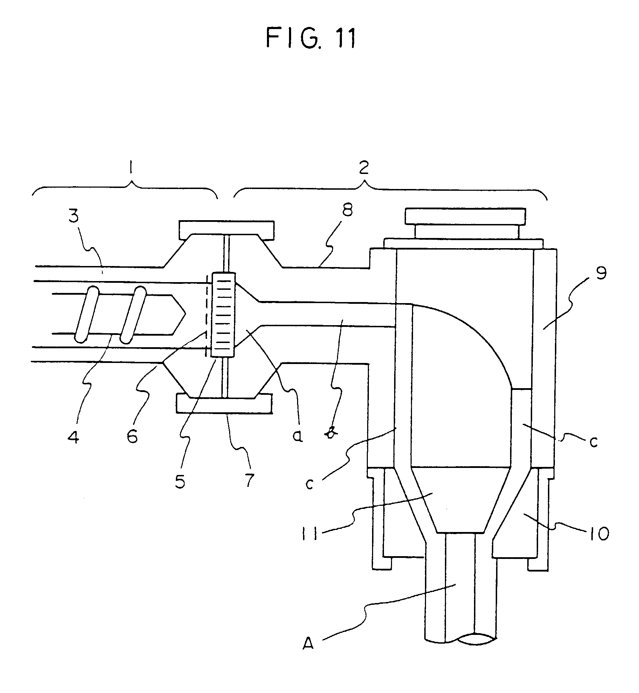

In Fig. 11, numeral 1 designates the end of the extruder body on which is mounted an extrusion head 2.

A material resin fed in a barrel 3 of the extruder is kneaded by a screw 4 in the barrel 3 into molten state. The molten resin then flows through a screen mesh 6 and a breaker plate 5 into passages a, b and c in the extrusion head 2, and is extruded through an outlet defined by a die 10 and a nipple 11 onto a conductor A to cover it.

Among the passages in the extrusion head 2, the passage c has a complicated shape comprising a cylindrical portion and a conical portion. Thus, it is extremely difficult to detect foreign objects in the resin while it is flowing through the passage c. Similarly, it is difficult to detect foreign objects while the resin is flowing through the passage a because it has a conical shape.

In contrast, the passage b is formed in a throat 8 provided between the breaker plate 5 located near the end of the screw 4 and a head body 9 and is narrow with a small sectional area. It is also simple in shape. Thus, the passage b is an ideal location to detect foreign objects in the resin.

According to the present invention, a transparent glass window is provided in this ideal spot, i.e. in the throat 8 of the extrusion head 2 to detect foreign objects in the resin by image processing.

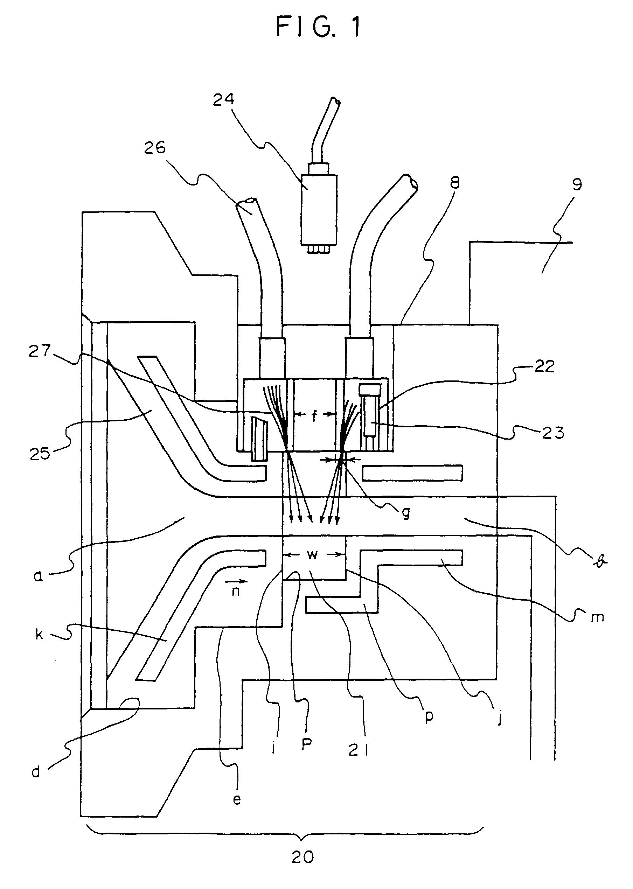

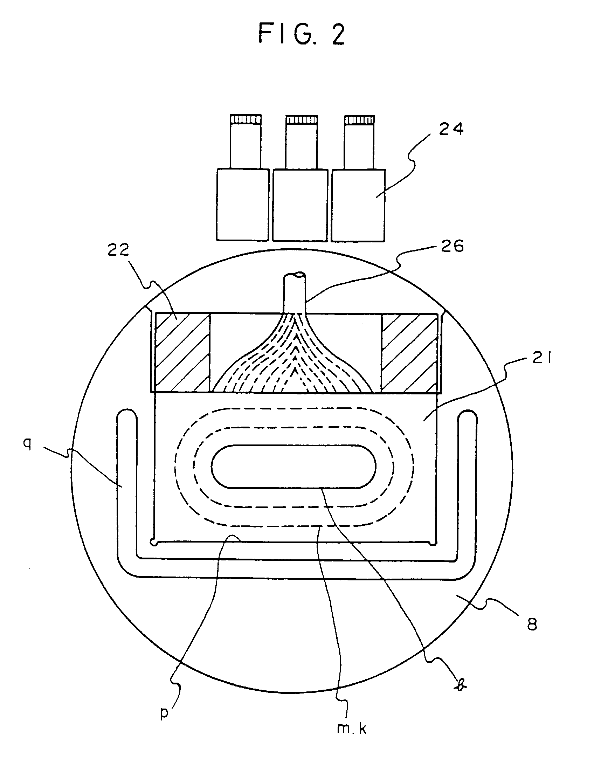

Fig. 1 is a vertical sectional view of a throat of an extrusion head equipped with a detector for detecting foreign objects in the resin. Fig. 2 is a sectional view taken along the plane of the see-through glass window provided in the throat of Fig. 1.

In the figures, numeral 21 designates the see-through glass window provided in the throat 8 of the extrusion head 2. The window 21 has a passage having a sectional shape identical to that of the passage b. A frame 22 serves as a presser for fixing the see-through glass window 21 to a body 20 of the throat. The see-through glass window 21 is fixed to the throat body 20 by mounting bolts 23. The frame 22 also has a function of supporting the window 21 to keep the tensile stress exerted on the window below a predetermined value even if the pressure of the resin increases inside the window. The frame 22 is formed with a rectangular slit having a width f. A camera 24 provided outside the glass window 21 takes pictures of the resin flowing through the passage b in the glass window through the rectangular slot.

The width f of the rectangular slot formed in the frame 22 coincides with the width of the visual field of the camera 24. The width w of the glass window 21 in the direction in which the resin flows is such that marginal portions having a width g on the order of several millimeters are provided on both sides of the slot. The frame 22 is pressed against the glass window 21 at its marginal portions g.

It is desirable that both the width f of the visual field and the width w of the see-through glass window be as large as possible in order to take pictures of the passage b. But since glass is a poor heat conductor, the width w of the window 21 should be as small as possible in order to maintain the temperature of the resin to a sufficiently high level so that it can be extruded easily. In order to satisfy both these requirements, the width g of the marginal portions is limited to a minimum of several millimeters. At the marginal portions g, the see-through glass window 21 is supported by the frame 22, so that the window 21 will never be subjected to a tensile stress higher than a permissible level even if the pressure of the resin acts thereon. In order for the frame 22 to perform this supporting function, its thickness and its flexural rigidity have to be sufficiently high.

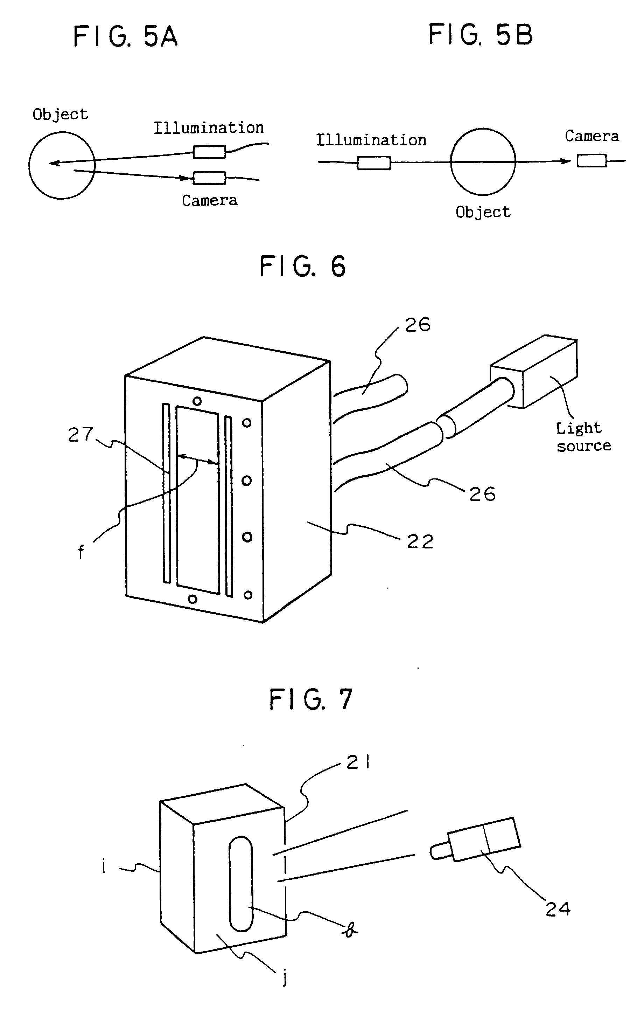

There are two types of picture processing arrangements. One is known as reflected illumination arrangement, in which the light source and the camera are arranged on the same side of the object as shown in Fig. 5A. The other is a transmitted illumination arrangement, in which they are arranged on opposite sides of the object as shown in Fig. 5B.

In the former arrangement, foreign objects are viewed as white spots against a dark background. In the latter, foreign objects appear black spots against a bright background. Figs. 1 and 2 show the former arrangement.

In order to detect foreign objects in the resin flowing through the passage, the latter has to be illuminated. In the embodiment of Fig. 1, narrow slit light beams 27 emitted from optical fibers 26 are directed through the narrow marginal portions g into the passage b to uniformly illuminate it.

Thus, the frame 22 has not only the function as a means for supporting the glass window 21, but it also constitutes a part of the light source for directing slit beams 27 into the passage b from both sides of the visual field f.

When forming an insulating layer on a large-diameter cable by extruding a resin, the passage b usually has a flattened shape with its two flat sides extending in a diametric direction of the cable (Fig. 2). With this arrangement, the resin can be extruded on the outer periphery of the cable smoothly and uniformly, so that the roundness of the cable improves.

When taking pictures of such a flattened passage with the camera, the camera should be arranged so as to face one of the flat sides of the passage, because with this arrangement, it is possible to set the focal depth of the camera smaller than arranged otherwise and thus to detect even extremely small foreign objects with high resolution. According to the present invention, the camera is arranged opposite to one of the flat sides of the flattened passage to take pictures of the passage from this side.

In order to take pictures from one of the flat surfaces with high resolution, a plurality of cameras 24 are needed. In the embodiment of Fig. 2, three cameras 24 are used.

Fig. 6 is a perspective view showing only the frame 22. The light guided through the optical fibers 26 is taken out in the form of slit beams 27 at both sides of the visual field width f. The light source is provided as a compact unit near the extrusion head and connected to the ends of the optical fibers 26 remote from the frame 22.

Fig. 7 is a perspective view showing only the see-through glass window 21. It has opposite sides i and j that abut the body 20 of the throat (Fig. 1). The glass window 21 has to be perfectly sealed by sandwiching it from both sides. Otherwise resin would leak under high pressure (on the order of several tens to one hundred and several tens of kilograms per square centimeter).

In order to prevent the leakage of resin, a slide member 25 forming the conical passage a is provided separately from the body 20 of the throat so as to be slidable on the throat body 20 at portions d and e.

If the pressure of the resin acts on the inner surface of the glass window, the bending moment resulting from the resin pressure that acts on the long sides of the flat oval section tends to concentrate on the centers of the short sides of the flat oval section, increasing tensile stresses at these portions. Thus, the glass window might be broken at these portions.

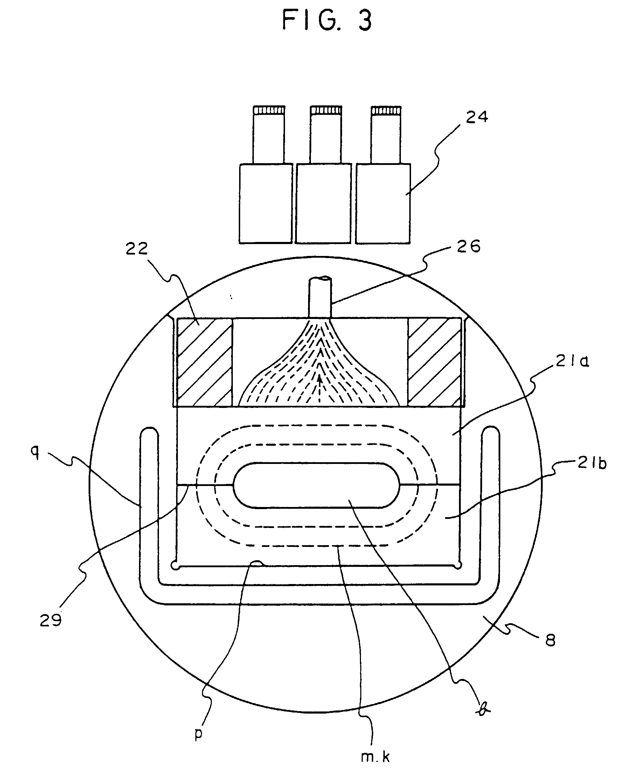

One measure to prevent the breakage of the glass window is shown in Fig. 3. In this arrangement, in order to reduce bending moment and thus tensile stresses which become maximum at the centers of the short sides, the glass window is split in two along a plane 29 including the centers of the short sides of the oval section. Further, the thus split halves of the glass window are pressed by the frame 22 to apply compressive stresses on the entire glass window.

Table 1 shows the results of a pressure test for a glass window having an integral structure and one made up of split halves. The resin pressure that acts on the extrusion head can reach as high as 200-300 kg/cm². The glass window having a split structure can withstand such a high pressure.

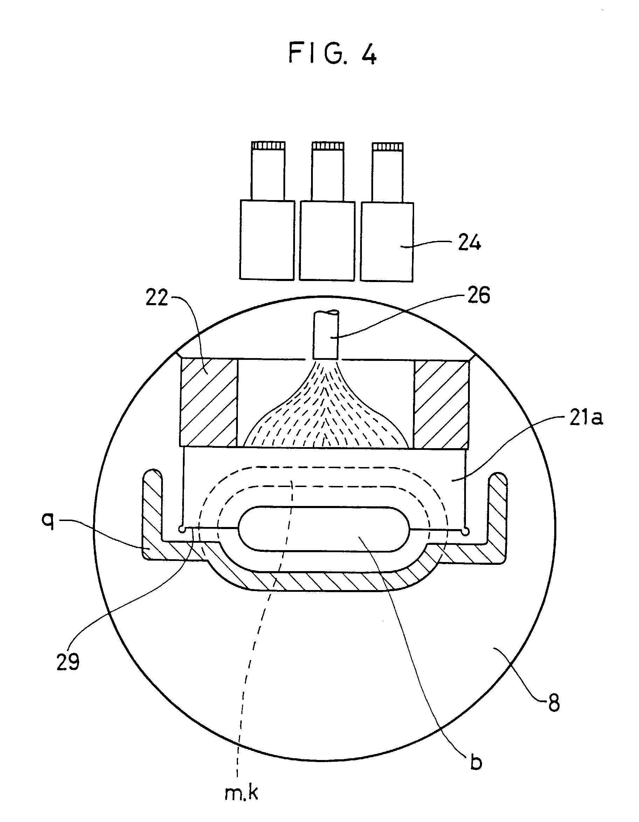

With a split structure, the material is not limited to glass-glass structure, but may be a combination of glass and metal or glass and ceramics, as shown in Fig. 4. If half is made of metal, it may be integral with the head body.

With this arrangement, the see-through glass window 21 can be clamped tightly against the throat body 20 of the extruder shown in Fig. 11, because:
1) by tightening a clamp 7 to join the extruder body 1 to the extrusion head 2 as shown in Fig. 11, the slide member 25 is moved in the direction n (Fig. 1) until it is pressed hard against the glass window 21; and
2) when resin is extruded by the screw 4, the pressure of the resin acts in the direction n, so that the slide member 25 is pressed harder against the glass window 21.

Thus, the see-through glass window is clamped strongly in the throat body 20, so that the leakage of resin is prevented.

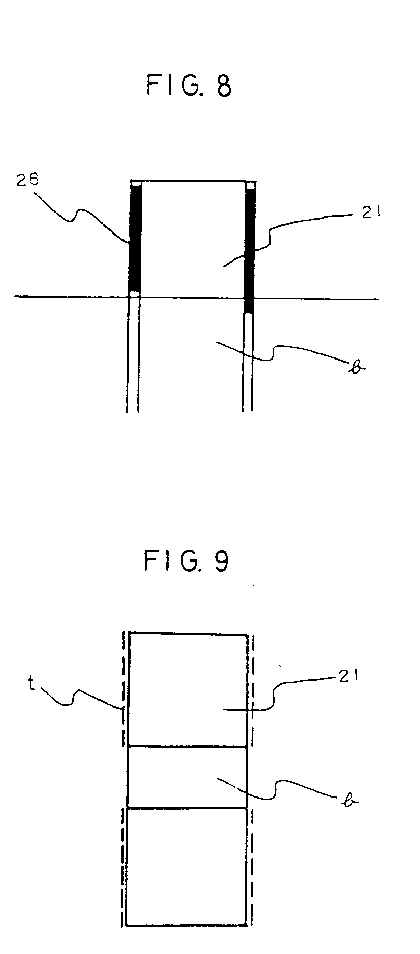

By providing the slide member 25, the leakage of resin is prevented in a practical sense. But if it is desired to completely eliminate such leakage of resin, sheet packings 28 of e.g. tetrafluoropolyethyleneresin may be sandwiched on both sides of the see-through glass window 21 as shown in Fig. 8. On a microscopic level, the surfaces of both the glass window and the mating surface are not perfectly flat but have projections and recesses. These projections and recesses serve to prevent the passage of any small amount of resin.

However, serious quality trouble may result unless tremendous care is exercised if such thin sheet packings 28 are used. Namely, the ends of the packings 28 have to be accurately flush with the inner surface of the channel b. If the end of either packing 28 is retracted from the inner surface of the channel b as with the lefthand packing in Fig. 8, resin will be trapped in this small recess, producing resin scum. In contrast, if the end protrudes into the passage b as with the righthand packing in Fig. 8, the protruding portion may be ripped off by the flowing resin and mixed into the flow of resin as extra foreign objects.

According to the present invention, the packings 28 are formed by fusing a resin material t to the sides of the glass window 21 which are to be brought into contact with the throat body 20 (Fig. 9). Namely, the packings are integral with the glass window 21, so that their ends are accurately kept flush with the inner surface of the channel b.

In the reflected illumination arrangement shown in Figs. 1 and 2, foreign objects are detected in the form of bright white spots against dark background. Thus, if the background were white, it would be impossible to digitize the image of the white spots. Thus, we blackened the surface p (Fig. 2) of the throat body which is in contact with the glass window 21 and which serves as the background when the passage is viewed from the camera 24.

When forming a high-voltage cable by extruding a crosslinked polyethylene, it is important to control the resin temperature in order to assure high quality. Glass is a poor heat conductor compared with metal. Thus, the use of glass may make temperature control difficult.

According to the present invention, as shown in Figs. 1 and 2, there are provided an oil jacket m around the passage b in the throat 8, an oil jacket q around the see-through glass window 21, and an oil jacket k in the slide member 25. Heating oil such as silicone oil is circulated therein. With this arrangement, it is possible to control the resin temperature so that a high-voltage cable can be formed by extruding resin even if the glass window is provided in the throat of the extrusion head.

We have so far described the present invention with reference to mainly Figs. 1 and 2, which show the embodiment of reflected illumination arrangement. But the concept of the invention is equally applicable to the transmitted illumination arrangement.

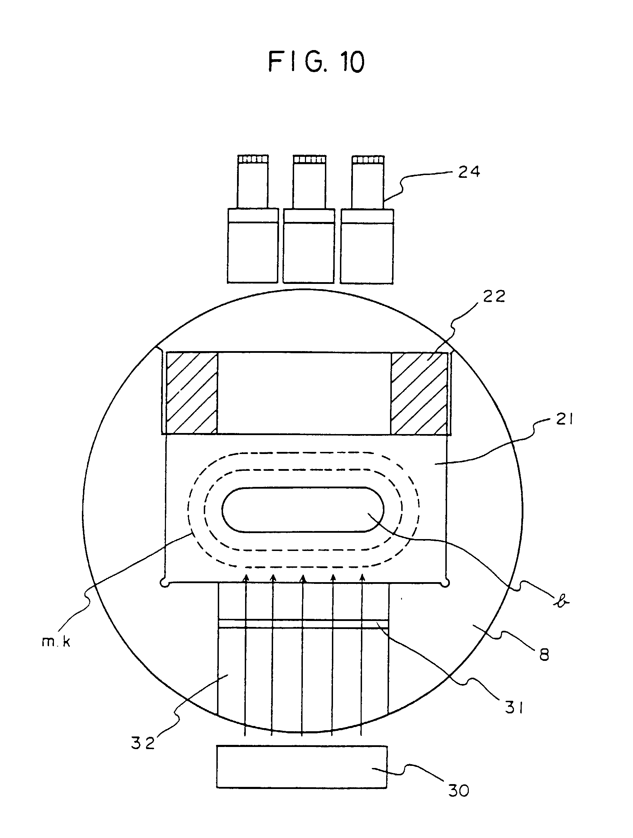

Fig. 10 shows a sectional view of the throat for use in the transmitted illumination arrangement. In this figure, the same numeral as those in Fig. 2 indicate like elements. In this arrangement, a milk-white diffuser panel 31 is interposed between the light source 30 and the see-through glass window 21 to produce a uniform white background against which foreign objects can be detected clearly as black spots.

In the transmitted illumination arrangement, a large opening 32 has to be provided in the throat 8 opposite to the camera 24. This opening not only weakens the strength of the throat 8 but makes it impossible to provide the oil jacket that encloses the see-through glass window 21. Thus, the reflected illumination arrangement is more desirable.

According to the present invention, it is possible to detect foreign objects in the resin flowing in the passage by picture processing while controlling the resin temperature without the possibility of leakage of resin at the throat of an extrusion head for forming an extra-high-voltage cable by extruding such a resin as a crosslinked polyethylene. Since the throat is located near the terminal end of the passage and the entire section of the passage can be examined at the throat, it is possible to prevent foreign objects from mixing into the insulating layer of the cable and thus its strength to withstand voltage from dropping.

This makes it possible to detect foreign objects in real time while extruding an extra-high-voltage plastic insulated cable and thus to produce a highly reliable extra-high-voltage plastic insulated power cable.

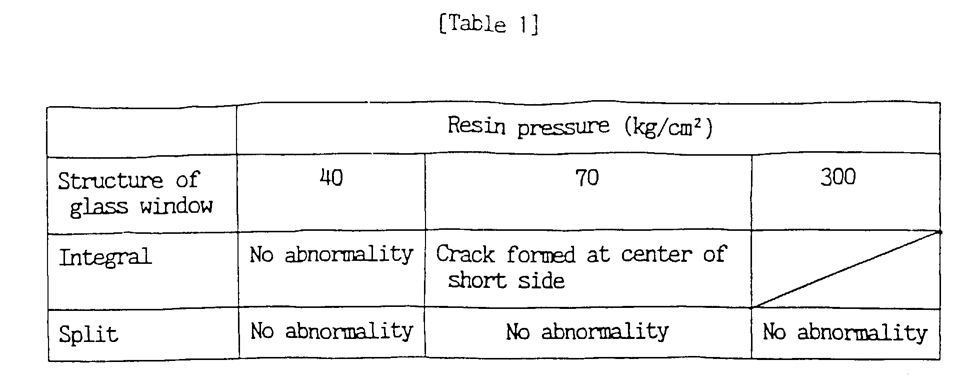

## Claims

1. A device for detecting foreign objects in a resin in an extrustion head (2) of an extruder for forming a plastic power cable by extruding a plastic material, with a see-through glass window (21) provided in a throat portion (8) of the extrusion head (2), a light source (30) for illuminating a passage and a camera (24) for taking pictures of said passage (b), said light source (30) and said camera (24) being arranged outside said see-through glass window (21), whereby any minute foreign objects in a molten resin flowing through said throat portion can be detected visually or by picture processing,
characterized in that
the throat portion (8) is provided between a breaker plate (5) mounted on the leading end of a screw (4) and the body (9) of the extrusion head (2) including a die (10) and a nipple (11) and having the passage (b) for resin having a restricted section and that
a slide member (25) is slidably mounted between said screw (4) and said glass window (21), said slide member (25) being adapted to be pressed hard against said glass window (21) by the pressure of resin when a resin is extruded by said screw (4), thereby pressing said see-through glass window (21) tightly against the body of the extrusion head (2) to prevent leakage of resin.

2. A device according to claim 1, characterized in that the width, with respect to the direction of flow or resin, of the see-throuh glass window (21) is a minimum width (w) determined by the relation between the flow speed of resin and the picture processing time, wherein a frame (22) is provided which overlaps marginal portions of said see-through glass window (21), said overlapping portions (g) being of a width of several millimeters, and that a slit-like light guide (f) is mounted in said frame (22) within the width of said overlapping portions, said slit-like light guide (f) being of such a length that it can cover the entire long side of said passage (b).

## Patentansprüche

1. Vorrichtung zur Feststellung von Fremdstoffen in einem Harz in einer Kopfziehform (2) einer Strangpresse zur Bildung eines Kunststoff-Starkstromkabels durch Extrudieren eines Kunststoffmaterials, mit einem durchsichtigen Glasfenster (21), das in einem Halsbereich (8) der Kopfziehform (2) angeordnet ist, einer Lichtquelle (30) zur Beleuchtung eines Durchgangs und einer Kamera (24), um Bilder des Durchgangs (b) aufzunehmen, wobei die Lichtquelle (30) und die Kamera (24) außerhalb des durchsichtigen Glasfensters (21) angeordnet sind, wodurch jegliche winzige Fremdkörper in einem schmelzflüssigen Harz, das durch den Halsbereich fließt, visuell oder durch Bildverarbeitung erfasst werden können,
dadurch gekennzeichnet, dass
der Halsbereich (8) zwischen einer auf dem vorderen Ende einer Schraube (4) befestigten Stauscheibe (5) und dem Körper (9) der Kopfziehform (2) angeordnet ist, welcher eine Düse (10) und einen Nippel (11) ebenso aufweist wie den Durchgang (b) für Harz mit einem eingeschränkten Abschnitt und dass
ein Gleitelement (25) gleitend zwischen der Schraube (4) und dem Glasfenster (21) befestigt ist, wobei das Gleitelement (25) dazu vorgesehen ist, durch den Druck des Harzes fest gegen das Glasfenster (21) gedrückt zu werden, wenn ein Harz durch die Schraube (4) extrudiert wird, wodurch das durchsichtige Glasfenster (21) eng an den Körper der Kopfziehform (2) gedrückt wird, um ein Auslaufen von Harz zu verhindern.

2. Vorrichtung nach Anspruch 1, dadurch gekennzeichnet, dass die Breite des durchsichtigen Glasfensters (21) in Bezug auf die Fließrichtung bzw. das Harz eine minimale Breite (w) ist, die durch das Verhältnis zwischen der Fließgeschwindigkeit des Harzes und der Bildverarbeitungszeit bestimmt wird,
wobei ein Rahmen (22) vorgesehen ist, der Randbereiche des durchsichtigen Glasfensters (21) überlappt und wobei die Überlappungsbereiche (g) eine Breite von mehreren Millimetern haben,
und dass eine schlitzartige Lichtführung (f) innerhalb der Breite der Überlappungsbereiche in dem Rahmen (22) angeordnet ist, wobei die schlitzartige Lichtführung (f) so lang ist, dass sie die gesamte Längsseite des Durchgangs (b) abdecken kann.

## Revendications

1. Dispositif pour détecter des objets étrangers dans une résine dans une tête d'extrusion (2) d'une extrudeuse pour former un câble de puissance en matière plastique par extrusion d'une matière plastique, comportant une fenêtre (21) en verre transparente constituée dans une partie en étranglement (8) de la tête d'extrusion (2), une source de lumière (30) pour illuminer un passage et un appareil (24) de prise de vues pour prendre des images dudit passage (b), ladite source de lumière et ledit appareil (24) de prise de vues étant disposés à l'extérieur de ladite fenêtre (21) en verre transparente, de sorte que tout objet étranger minuscule dans une résine fondue s'écoulant à travers ladite partie en étranglement puisse être détecté visuellement ou par traitement d'images,
caractérisé en ce que la partie en étranglement (8) est constituée entre une grille broyeuse (5), montée à l'extrémité avant d'une vis (4), et le corps (9) de la tête d'extrusion (2) comprenant une filière (10) et un manchon (11) et comportant le passage (b) pour la résine présentant une section réduite, et en ce que
un élément de glissement (25) est monté coulissant entre ladite vis (4) et ladite fenêtre en verre (21), ledit élément de glissement (25) étant adapté pour être ajusté serré contre ladite fenêtre (21) en verre par la pression de la résine quand une résine est extrudée par ladite vis (4), ce qui presse ainsi ladite fenêtre en verre (21) transparente étroitement contre le corps de la tête d'extrusion (2) pour empêcher une fuite de résine.

2. Dispositif selon la revendication 1, caractérisé en ce que la largeur, par rapport à la direction d'écoulement de la résine, de la fenêtre (21) en verre transparente, est une largeur minimale (w) déterminée par la relation entre la vitesse d'écoulement de la résine et la durée du traitement d'images, où un châssis (22) est constitué avec des parties de bord en recouvrement partiel de la fenêtre (21) en verre transparente, lesdites parties en recouvrement partiel (g) étant d'une largeur de plusieurs millimètres, et en ce qu'un guide de lumière (f) sous forme d'une fente est monté dans ledit châssis (22) à l'intérieur de la largeur desdites parties en recouvrement partiel, ledit guide de lumière (f) sous forme d'une fente étant d'une longueur telle qu'il puisse couvrir la totalité du grand côté dudit passage (b).
